# EUROPÄISCHE PATENTANMELDUNG

(11) **EP 4 379 232 A1**
(43) Veröffentlichungstag der Anmeldung: **05.06.2024**
(21) Anmeldenummer: 23194151.9
(22) Anmeldetag: 30.08.2023
(51) Int. Cl.: F16F 9/04, F16F 9/05

(54) **LUFTFEDER MIT QUERSTEIFIGKEIT**

(30) Priorität: 30.09.2022 DE 102022210452
(71) Anmelder: ContiTech Luftfedersysteme GmbH, 30165 Hannover (DE)
(72) Erfinder: Kranz, Harald, 30165 Hannover (DE)
(74) Vertreter: Continental Corporation

(57) **Zusammenfassung**

Die Erfindung betrifft eine Luftfeder (1), wobei die Luftfeder (1) ein Arbeitsvolumen (2) aufweist, welches durch eine Felge (3), einen Luftfederbalg (4) und einen Kolben (5) begrenzt wird. Der Luftfederbalg (4) ist auf wenigstens einem Teilbereich seines Umfangs segmentweise in so verstärkt und/oder geschwächt, dass bei Federung bzw. Auslenkung des Luftfederbalgs (4) in horizontaler Richtung über den Balgumfang im Bereich des verstärkten Umfangssegments (6, 7) eine höhere Steifigkeit des Luftfederbalgs (4) vorhanden ist als in dem nicht verstärkten und/oder geschwächten Umfangsbereich und/oder in dem geschwächten Umfangssegment eine geringere Steifigkeit des Luftfederbalgs (4) vorhanden ist als in dem verstärkten und/oder nicht geschwächten Umfangssegment (6, 7), sodass unterschiedliche Steifigkeiten in Längsrichtung (X) und in Querrichtung (Y) vorhanden sind. Das verstärkte und/oder geschwächte Umfangssegment (6, 7) wird durch eine in Teilbereichen des Umfangs des Luftfederbalgs (4) variierende Wanddicke bereitgestellt.

## Beschreibung

Die Erfindung betrifft eine Luftfeder für ein Schienenfahrzeug gemäß dem Oberbegriff des Anspruchs 1. Die Erfindung betrifft außerdem ein Schienenfahrzeug.

Luftfederungen sind aus dem Stand der Technik bekannt und bei Schienenfahrzeugen in der Regel als Sekundärfedersystem zwischen einem gefederten Wagenkasten und einem als Fahrwerk dienenden Drehgestell oder Fahrwerksschemel angeordnet. Die Luftfederung weist dabei einen Arbeits- oder Druckraum mit einem durch die oben genannten Bauteile begrenzten Volumen auf, auch Luftfederkammer oder Luftfedervolumen genannt.

Diese Luftfederkammer dient als Arbeitskammer, um Kräften, die zwischen der Felge und Deckelplatte wirken, durch ein Komprimieren eines von der Luftfederkammer eingeschlossenen Volumens an Luft oder einem anderen Arbeitsgas entgegenzuwirken. Wird die Luftfeder also in ihrer Längsachse mit Kräften beaufschlagt, wirken auf die Grundplatte und die Felge Kräfte in entgegengesetzter Richtung, sodass die Luft in der Luftfederkammer komprimiert wird. Dies verursacht wiederum ein Aufblähen des Luftfilterbalgs in Querrichtung der Luftfeder, sodass es zu entsprechenden Reaktionskräften kommt, die einem Zusammendrücken der Felge und der Grundplatte bzw. des Kolbens entgegenwirken.

Im Stand der Technik sind allerlei Lösungen bekannt, die zu einem besseren Federungsverhalten solcher Systeme führen.

Die US 2014/091504 A1 offenbart eine Luftfederanordnung, bei der eine Luftfeder aus elastomeren Material, etwa eine Balgfeder aus Gummi, mit einer äußeren unelastischen Verstärkungsstruktur umgeben wird, die sich zwischen den Befestigungspunkten der Luftfeder über die Länge derselben erstreckt. Die Verstärkungsstruktur ist aus mehreren Wandsegmenten ausgebildet und in der Herstellung sehr aufwendig. Die äußere Verstärkungsstruktur besteht im Wesentlichen aus einem käfigartig die Luftfeder umschließenden Element, welches ein zu starkes Aufweiten und Aufblähen der Luftfeder verhindern soll. In der Verstärkungsstruktur sind Öffnungen vorgesehen, in welche sich das Wandmaterial der Luftfeder eindrücken kann.

Die US 2010/289197 A1 offenbart eine Luftfederanordnung mit einem Luftfederbalg aus elastomerem Material, der in unterschiedlichen ringförmigen Bereichen des Balgs unterschiedliche Steifigkeiten aufweist, die dadurch erreicht werden, dass die Wanddicke des Balgs unterschiedlich stark ausgebildet ist. Nachteiliger Weise können durch den Luftfederbalg aus der US 2010/289197 A1 durch dessen Einbauposition keine unterschiedlichen Steifigkeiten in Auslenkungsrichtung erzeugt werden, da die Gesamtsteifigkeit des Luftfederbalgs in Umfangsrichtung konstant ist.

Die WO 2008/017459 A1 offenbart eine Luftfeder mit einem Luftfederbalg für ein Fahrzeug, wobei der Luftfederbalg zwischen einem oberen Befestigungsabschnitt und einem unteren Tauchkolben befestigt ist. Zwischen Befestigungselement und Tauchkolben ist ein Verdrängungselement vorgesehen, welches im eingefederten Zustand den Raum zwischen Tauchkolben und dem Befestigungselement im Wesentlichen ausfüllt. Damit soll verhindert werden, dass der Luftfederbalg zwischen Befestigungselement und Kolbendeckel eingeklemmt wird.

Die GB 2 456 750 A offenbart eine Luftfeder mit einem durch innenliegende Festigkeitsträger verstärkten Balg, der von einer außen den Balg umgebenden Stützhülse geführt wird. Die Balgteile, die sich innerhalb der Hülse befinden und sich an die Hülse anlegen, also von außen abgestützt werden, weisen Festigkeitsträger auf, die sich lediglich in eine Richtung erstrecken, hier in Längsrichtung des Balges. Die Balgteile, die außerhalb oder innerhalb der Hülse an der Kolbenwandlung abrollen, weisen mehrere sich kreuzende Festigkeitsträger auf.

Zwischen Felge und Kolben wirken im Fahrbetrieb aber auch starke Kräfte in Querrichtung, d.h. in horizontaler Richtung der Luftfeder, die eine Federung bzw. Auslenkung des Luftfederbalgs in horizontaler Richtung bewirken. In diesem Fall verschieben sich die Felge und die Grundplatte in Querrichtung zueinander, was ebenfalls zu einem Komprimieren der Luft in der Luftfeder führt. Entsprechend der zuvor genannten Erläuterung verursacht diese Komprimierung Reaktionskräfte, die dem relativen Verschieben der Felge und der Deckelplatte in Querrichtung zueinander entgegenwirken. Solche Kräfte in Querrichtung treten insbesondere dann auf, wenn zum Beispiel Schienenfahrzeuge Kurvenstrecken durchfahren und sich zum Beispiel ein vorderes und ein hinteres Drehgestell eines Wagenkastens voneinander unabhängig im Rahmen ihrer Schienenführung verdrehen. Durch das Ausdrehen der Drehgestelle beim Durchfahren von Kurven treten in horizontaler Richtung häufig Bewegungen von mehr als 120 mm, abhängig vom Kurvenradius und vom Drehzapfenabstand der beiden Drehgestelle eines Wagens, auf. Gleichzeitig unterliegen die Luftfedern dabei einer Verdrehung als Folge der Drehbewegungen der Drehgestelle beim Durchfahren der Kurven (Ausdrehwinkel σ).

Bei Schienenfahrzeugen mit mehreren solchen Drehgestellen dienen Luftfedern dazu, den Fahrkomfort des Schienenfahrzeugs zu gewährleisten oder zu erhöhen. Um den Fahrkomfort zu erhöhen ist es gewünscht, die Steifigkeit der Luftfeder, d.h. des Luftfederbalgs vergleichsweise gering auszubilden. Dies führt jedoch dazu, dass bei Kurvenfahrten die auftretenden Querkräfte bzw. Lateralkräfte eine starke Verschiebung des Wagenkastens relativ zum Drehgestell bewirken können und zu erhöhten Wankbewegungen des Wagenkastens um seine Längsachse führen. Dieses Verhalten ist zum Beispiel bei engen Tunneldurchfahrten oder Bauwerken neben dem Schienenweg ausgesprochen unerwünscht, da vorbestimmte Durchfahrquerschnitte nicht überschritten werden dürfen. Es liegt also ein gewisser Zielkonflikt darin, dass einerseits ein hoher Komfort gewünscht ist, dass andererseits jedoch die Luftfeder ein Wanken und eine Verschiebung des Wagenkastens möglichst verhindern soll.

Um diesen Anforderungen zu genügen, sind bereits Lösungen überlegt worden, bei denen der mit dem Wagenkasten verbundene Luftfederdeckel mit kragenartigen Vorsprüngen versehen ist, die über den Umfang des Luftfederbalges unterschiedlich tief bzw. weit den Luftfederbalg umfassen oder führen und so in seinen Auslenkungen begrenzen. Solche Lösungen beinhalten jedoch erheblichen Aufwand bei der Herstellung und erhöhen durch das dazu erforderliche Material am Luftfederdeckel das Gewicht der Luftfederung.

Eine weitere Lösung ist durch die EP 3 081 827 B1 offenbart, die eine Luftfederung für ein Schienenfahrzeug betrifft, wobei der Luftfederbalg mindestens segmentweise über seinen Umfang mit Festigkeitsträgern so verstärkt ist, dass bei Federung bzw. Auslenkung des Luftfederbalgs in horizontaler Richtung über den Balgumfang im Bereich der verstärkten Segmente bzw. Umfangsbereiche eine höhere Steifigkeit des Luftfederbalgs vorhanden ist als in den nicht durch Festigkeitsträger verstärkten Umfangsbereichen. Die verstärkten Segmente des Luftfederbalgs sind so ausgebildet, dass unterschiedliche Steifigkeiten in Fahrtrichtung und in einer zur Fahrtrichtung winkligen horizontalen Richtung vorhanden sind, insbesondere in Fahrtrichtung und in einer senkrecht zur Fahrtrichtung stehenden lateralen Richtung. Die Herstellung eines Luftfederbalgs mit einer nur segmentweisen Anordnung von Festigkeitsträgern gestaltet sich als sehr aufwendig in der Fertigung. Zudem ist die Einbauorientierung der Luftfeder nur schwer bestimmbar, da die Segmente höherer Steifigkeit von den Segmenten geringerer Steifigkeit nicht visuell erkennbar sind.

Der Erfindung liegt die Aufgabe zu Grunde, eine Luftfeder bereitzustellen, die je nach Belastungsrichtung durch Querkräfte unterschiedliche Steifigkeiten aufweist, somit unterschiedliche Reaktionskräfte hervorruft und trotzdem leicht und einfach herzustellen ist. Zusätzlich oder alternativ soll die Steifigkeit der Luftfeder in Belastungsrichtung während der Installation an einem Fahrzeug oder einer Maschine einstellbar sein. Die Luftfeder soll dazu geeignet sein, einem Wanken eines Wagenkastens eines Schienenfahrzeugs um die Längsachse entgegenzuwirken und gleichzeitig einen möglichst hohen Fahrkomfort zu gewährleisten.

Die Lösung dieser Aufgabe ergibt sich durch eine Luftfeder mit den Merkmalen des unabhängigen Anspruchs 1.
Weitere vorteilhafte Ausbildungen sind in den abhängigen Ansprüchen offenbart. Anspruch 8 offenbart ein Schienenfahrzeug mit einer erfindungsgemäßen Luftfeder. Weitere Vorteile und Merkmale sind der allgemeinen Beschreibung sowie den Ausführungsbeispielen zu entnehmen.

Die vorliegende Anmeldung betrifft eine Luftfeder für ein Schienenfahrzeug, angeordnet zwischen einer Karosserie oder einem Wagenkasten und einem Fahrgestell, wobei die Luftfeder ein Arbeitsvolumen aufweist, welches durch eine mit dem Wagenkasten verbundenen Felge, einen Luftfederbalg aus elastomerem Material und einen fahrwerkseitigen Kolben begrenzt wird, wobei der Luftfederbalg auf wenigstens einem Teilbereich seines Umfangs segmentweise so verstärkt und bzw. oder geschwächt ist, dass bei Federung bzw. Auslenkung des Luftfederbalgs in horizontaler Richtung über den Balgumfang im Bereich eines verstärkten Umfangssegments eine höhere Steifigkeit des Luftfederbalgs vorhanden ist als in dem nicht verstärkten und bzw. oder geschwächten Umfangsbereich und bzw. oder in dem geschwächten Umfangssegment eine geringere Steifigkeit des Luftfederbalgs vorhanden ist als in dem verstärkten und bzw. oder nicht geschwächten Umfangssegment, sodass unterschiedliche Steifigkeiten in Fahrtrichtung und in einer zur Fahrtrichtung winkligen horizontalen Richtung vorhanden sind, insbesondere in Längsrichtung und in einer senkrecht zur Längsrichtung stehenden Querrichtung. Das verstärkte und bzw. oder geschwächte Umfangssegment wird durch eine in Teilbereichen des Umfangs des Luftfederbalgs variierende Wanddicke bereitgestellt.

Mit anderen Worten kann der Luftfederbalg verstärkt oder geschwächt Umfangssegmente aufweisen oder verstärkt und geschwächte Umfangssegmente in Kombination miteinander aufweisen. Durch einen solchen Luftfederbalg, der in Teilbereichen seines Umfangs verstärkte und bzw. oder geschwächte Segmente aufweist, kann die Steifigkeit des Luftfederbalges segmentweise über den Umfang verändert werden. Damit ist in bestimmten Quer- oder Lateralrichtungen, d.h. in bestimmten senkrecht zur Luftfederachse oder Torusachse liegenden Richtungen, eine andere Steifigkeit vorhanden als in der oder den übrigen Quer- oder Lateralrichtungen. Die von der Steifigkeit abhängige Reaktion des Luftfederbalges bzw. der Luftfeder auf Querkräfte bzw. Lateralkräfte ist somit je nach Richtung ihrer Einwirkung unterschiedlich. Somit kann eine Längsbewegung komfortabel und relativ weich abgefedert werden, während eine Querbewegung möglichst unterbunden werden kann.

Auf vorteilhafte Weise kann die Quersteifigkeit der Luftfeder durch eine definierte Anordnung der geschwächten und bzw. oder verstärkten Umfangssegmente über den Umfang des Luftfederbalgs richtungsabhängig eingestellt werden. Zusätzlich oder alternativ kann die Luftfeder bei Verbau an einem späteren Bestimmungsort, beispielsweise an dem Fahrwerk eines Schienenfahrzeugs, um eine Hochachse der Luftfeder so positioniert werden, dass die geschwächten und bzw. oder verstärkten Umfangssegmente in Relation zur Fahrtrichtung so angeordnet sind, dass sich die gewünschten Steifigkeiten in Längsrichtung bzw. Fahrtrichtung und bzw. oder in Querrichtung ergeben. Die geschwächten und bzw. oder verstärkten Umfangssegmente können visuell von außen durch Verdickungen bzw. Verjüngungen der Wanddicke erkannt werden.

Gemäß einem weiteren Aspekt ist der Luftfederbalg als eine für insbesondere horizontale Auslenkungen vorgesehene Halbbalgluftfeder ausgebildet. Wie bereits oben geschildert, können durch das Ausdrehen der Drehgestelle beim Durchfahren von Kurven in horizontaler Richtung durchaus große Querbewegungen auftreten, abhängig vom Kurvenradius und vom Drehzapfenabstand der Drehgestelle eines Wagens. Gleichzeitig unterliegen die Luftfedern dabei einer Verdrehung in sich, nämlich durch die Verdrehung der Drehgestelle als solches. Für derartig große Seiten- und Drehbewegungen mussten großvolumige Luftfedern entwickelt werden, nämlich die so genannten Halbbalgluftfedern, deren Torus im Querschnitt ballonförmig, rundlich und die Felge etwa schlauchförmige umgebend ausgebildet ist. Die bei solchen Halbbalgluftfedern vergleichsweise geringe Steifigkeit kann mithilfe der erfindungsgemäßen Ausbildung auf einfachste Weise so angepasst werden, dass in bestimmten Querrichtungen die Steifigkeit erhöht wird und somit gute seitliche Führungseigenschaften erreicht werden.

Gemäß einem weiteren Aspekt der vorliegenden Erfindung ist das verstärkte und bzw. oder geschwächte Segment des Luftfederbalgs so ausgebildet bzw. angeordnet, dass unterschiedliche Steifigkeiten in Längsrichtung und in lateraler, senkrecht zur Längsrichtung stehender Querrichtung vorhanden sind. So kann der Luftfederbalg auf vorteilhafte Weise in unterschiedlichen Richtungen verschiedene Anforderungen an Komfort und bzw. oder Sicherheit erfüllen.

Gemäß einer weiteren vorteilhaften Ausbildung ist das verstärkte oder geschwächte Umfangssegment des Luftfederbalgs so ausgebildet, dass in beiden Querrichtungen die Steifigkeit des Luftfederbalgs erhöht ist. Eine solche Ausbildung der Luftfeder erlaubt ein "weiches" Anfahren des Schienenfahrzeugs und gleichzeitig ein geringes Ausweichen des Wagenkastens bei etwa einwirkenden Querkräften oder Fliehkräften, je nach Ausbildung und Anordnung der verstärkten und bzw. oder geschwächten Segmente. So kann eine sichere Führung des Wagenkastens bei hoher Quersteifigkeit der Luftfeder beispielsweise in Tunneldurchfahrten oder in engen Bahnhofsdurchfahrten gewährleistet werden.

Gemäß einem weiteren Aspekt weist das verstärkte Umfangssegment eine größere Wanddicke als der übrige Luftfederbalg auf, wobei das verstärkte Umfangssegment vorzugsweise in Querrichtung orientiert ist. Die größere Wanddicke hat eine unmittelbare Erhöhung der Steifigkeit zur Folge und kann einfach und kostengünstig hergestellt werden.

Gemäß einem weiteren Aspekt ist das verstärkte Umfangssegment aus elastomerem Material ausgebildet, vorzugsweise aus dem elastomeren Material des Luftfederbalgs. Wie zuvor erwähnt kann eine Verstärkung aus elastomerem Material einfach herstellbar sein, indem eine oder mehrere zusätzliche Lagen bzw. Schichten von elastomerem Material in dem betreffenden Umfangssegment angeordnet werden. Im Vergleich zu anderen, nicht elastomeren Materialien zur Steifigkeitserhöhung kann eine Präparation zu dem übrigen elastomeren Material des Luftfederbalgs mit z.B. haftvermittelnden Substanzen entfallen. Hierdurch können Kosten in der Herstellung eingespart werden.

Gemäß einem weiteren Aspekt weist das geschwächte Umfangssegment eine geringere Wanddicke als der übrige Luftfederbalg auf, wobei das geschwächte Umfangssegment vorzugsweise in Längsrichtung orientiert ist. Es zeigt sich als besonders vorteilhaft, dass eine Schwächung durch z.B. Entnahme von überschüssigem elastomerem Material des Luftfederbalgs auch nach der Herstellung der Luftfeder erfolgen kann. So kann die Luftfeder und deren Steifigkeit individuell an die Erfordernisse der Anwendung durch manuelles Nachbearbeiten angepasst werden. Damit lassen sich auf sehr einfache Art unterschiedliche Steifigkeiten in unterschiedlichen Raumrichtungen der Luftfeder erreichen.

Besonders geeignet ist eine solche zwischen Wagenkasten und dem Drehgestell angeordnete Luftfeder für ein Schienenfahrzeug, das ein als Fahrwerk dienendes Drehgestell mit mindestens einer Achse und daran drehbar gelagerten Rädern aufweist, sowie einen Wagenkasten, der um eine Fahrzeughochachse drehbar gelagert an dem Drehgestell befestigt ist. Üblicherweise sind solche Luftfedern paarweise in einem Drehgestell angeordnet, nämlich so, dass ein Paar von zwei erfindungsgemäß ausgestalteten Luftfederungen vorgesehen ist, die in Fahrzeugquerrichtung voneinander beabstandet und zu einer Fahrzeuglängsachse spiegelsymmetrisch ausgebildet sind.

Es wird ausdrücklich darauf hingewiesen, dass die vorstehend erläuterten Ausgestaltungen der Erfindung jeweils für sich oder in einer beliebigen technisch sinnvollen Kombination auch untereinander jeweils mit dem Gegenstand des Anspruchs 1 und bzw. oder dem unabhängigen Anspruch 8 kombinierbar sind.

Ausführungsbeispiele und weitere Vorteile der Erfindung werden nachstehend im Zusammenhang mit den folgenden Figuren schematisch dargestellt und näher erläutert. Darin zeigt:
Fig. 1 zeigt eine schematische Schnittdarstellung der erfindungsgemäßen Luftfeder gemäß eines ersten Ausführungsbeispiels in der Seitenansicht.
Fig. 2 zeigt eine schematische Darstellung der erfindungsgemäßen Luftfeder aus Fig. 1 in der Draufsicht.
Fig.3 zeigt eine Skizze eines schienengebundenen Kurzstreckentriebwagens mit der erfindungsgemäßen Luftfeder.

Die Beschreibung der o.g. Figuren erfolgt in kartesischen Koordinaten mit einer Längsrichtung X, einer zur Längsrichtung X senkrecht ausgerichteten Querrichtung Y. Die Längsrichtung X kann auch als Tiefe X und die Querrichtung Y auch als Breite Y bezeichnet werden. Die Längsrichtung X und die Querrichtung Y bilden gemeinsam die Horizontale, X, Y, welche auch als horizontale Ebene X, Y bezeichnet werden kann.

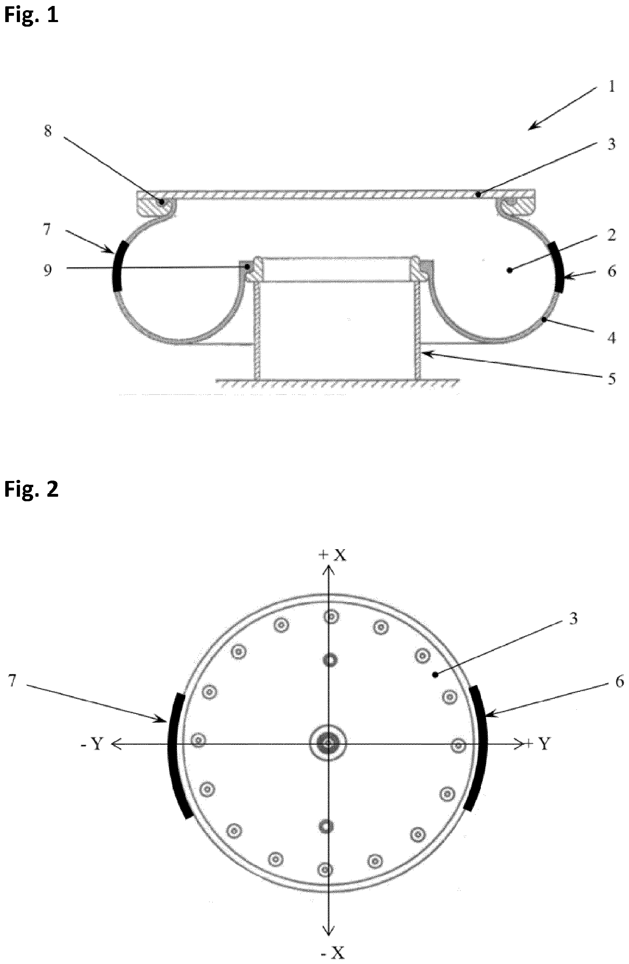

Fig. 1 zeigt eine Luftfeder 1 für ein Schienenfahrzeug, die ein Arbeitsvolumen 2 aufweist, welches durch eine mit einem Wagenkasten verbundenen Felge 3, einen Luftfederbalg 4 und einen fahrwerkseitigen Kolben 5 begrenzt wird. Der Luftfederbalg 4 ist segmentweise über seinen Umfang über Umfangssegmente 6 und 7 so verstärkt, dass bei Federung bzw. Auslenkung des Luftfederbalgs 4 über den Umfang des Luftfederbalgs 4 im Bereich der verstärkten Umfangssegmente 6, 7 eine höhere Steifigkeit des Luftfederbalgs 4 vorhanden ist als in den nicht verstärkten Umfangsbereichen. Der Luftfederbalg 4 weist an den Umfangssegmenten 6, 7 eine größere Wandstärke auf als an den übrigen Bereichen des Luftfederbalgs 4. Die verstärkten Umfangssegmente 6, 7 entstehen durch eine bei der Herstellung bereits erfolgte Integration einer zusätzlichen Elastomerlage in den Luftfederaufbau.

Der Luftfederbalg 4 ist hier als für insbesondere starke horizontale Auslenkungen ausgelegte so genannte "Halbbalgluftfeder" ausgebildet, die einen im Querschnitt ballonförmig, rundlichen Torus aufweist, deren Kernringe oder Befestigungswülste 8, 9 nicht übereinanderliegen, sondern einen unterschiedlichen Durchmesser aufweisen und somit lateral unterschiedlich weit vorn der Torusachse entfernt sind, und die den Kolben 5 bzw. die Felge 3 etwa schlauchförmig umgeben.

Fig. 2 zeigt die erfindungsgemäße Luftfeder 1 aus Fig. 1 in der Draufsicht. Die verstärkten Umfangssegmente 6, 7 des Luftfederbalgs 4 sind in beiden lateralen, senkrecht zur Fahrtrichtung stehenden Querrichtungen +/- Y angeordnet, und zwar so, dass der Luftfederbalg 4 in Querrichtung +/- Y eine höhere Steifigkeit aufweist als in Fahrtrichtung +/- X und daher in +/- Y-Richtung deutlich stärkere Rückstellkräfte erzeugt und deutlich weniger Auslenkung zulässt.

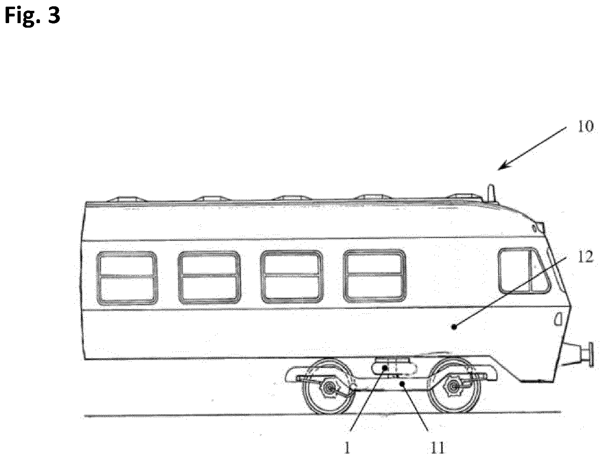

Die Fig. 3 zeigt zur Verdeutlichung des Einbauortes der erfindungsgemäßen Luftfeder 1 in einer Skizze den vorderen Teil eines schienengebundenen Kurzstreckentriebwagens 10. Ein Fahrschemel bzw. ein Fahrgestell 11, ist über zwei in Querrichtung voneinander beabstandeten und zur Fahrzeuglängsachse spiegelsymmetrisch angeordneten erfindungsgemäßen Luftfedern 1 mit einem Wagenkasten 12 des Triebwagens 10 verbunden.

### Bezugszeichenliste (Teil der Beschreibung)

- 1: Luftfeder
- 2: Arbeitsvolumen
- 3: Felge
- 4: Luftfederbalg
- 5: Kolben
- 6: verstärktes Umfangssegment
- 7: verstärktes Umfangssegment
- 8: Oberer Kernring bzw. Wulstring zur Befestigung des Luftfederbalgs
- 9: Unterer Kernring bzw. Wulstring zur Befestigung des Luftfederbalgs
- 10: Schienenfahrzeug, Kurzstreckentriebwagen
- 11: Fahrgestell, Drehgestell, Drehschemel
- 12: Wagenkasten / Karosserie

- X: Längsrichtung, Fahrtrichtung
- Y: Querrichtung

## Patentansprüche

1. Luftfeder (1) für ein Schienenfahrzeug (10), angeordnet zwischen einer Karosserie oder einem Wagenkasten (12) und einem Fahrgestell (11), wobei die Luftfeder (1) ein Arbeitsvolumen (2) aufweist, welches durch eine mit dem Wagenkasten (12) verbundenen Felge (3), einen Luftfederbalg (4) aus elastomerem Material und einen fahrwerkseitigen Kolben (5) begrenzt wird, wobei der Luftfederbalg (4) auf wenigstens einem Teilbereich seines Umfangs segmentweise in so verstärkt und/oder geschwächt ist, dass bei Federung bzw. Auslenkung des Luftfederbalgs (4) in horizontaler Richtung über den Balgumfang im Bereich eines verstärkten Umfangssegments (6, 7) eine höhere Steifigkeit des Luftfederbalgs (4) vorhanden ist als in dem nicht verstärkten und/oder geschwächten Umfangsbereich und/oder in dem geschwächten Umfangssegment eine geringere Steifigkeit des Luftfederbalgs (4) vorhanden ist als in dem verstärkten und/oder nicht geschwächten Umfangssegment (6, 7), sodass unterschiedliche Steifigkeiten in Fahrtrichtung und in einer zur Fahrtrichtung winkligen horizontalen Richtung vorhanden sind, insbesondere in Längsrichtung (X) und in einer senkrecht zur Längsrichtung (X) stehenden Querrichtung (Y), **dadurch gekennzeichnet, dass**
das verstärkte und/oder geschwächte Umfangssegment (6, 7) durch eine in Teilbereichen des Umfangs des Luftfederbalgs (4) variierende Wanddicke bereitgestellt wird.

2. Luftfeder (1) nach Anspruch 1, bei der der Luftfederbalg (4) als für insbesondere horizontale Auslenkungen vorgesehene Halbbalgluftfeder ausgebildet ist.

3. Luftfeder (1) nach einem der Ansprüche 1 oder 2, bei der das verstärkte und/oder geschwächte Segment (6, 7) des Luftfederbalgs (4) so ausgebildet ist, dass unterschiedliche Steifigkeiten in Längsrichtung (+/- X) und in lateraler, senkrecht zur Längsrichtung (X) stehenden Querrichtung (+/- Y) vorhanden sind.

4. Luftfeder (1) nach Anspruch 3, bei der das verstärkte oder geschwächte Umfangssegment (6, 7) des Luftfederbalgs (4) so ausgebildet ist, dass in beiden Querrichtungen (+/- Y) die Steifigkeit des Luftfederbalgs (4) erhöht ist.

5. Luftfeder (1) nach Anspruch 4, bei der das verstärkte Umfangssegment (6, 7) eine größere Wanddicke als der übrige Luftfederbalg (4) aufweist, wobei das verstärkte Umfangssegment (6, 7) vorzugsweise in Querrichtung (Y) orientiert ist.

6. Luftfeder (1) nach einem der vorhergehenden Ansprüche, wobei das verstärkte Umfangssegment (6, 7) aus elastomerem Material ausgebildet ist, vorzugsweise aus dem elastomeren Material des Luftfederbalgs (4).

7. Luftfeder (1) nach Anspruch 4, bei der das geschwächte Umfangssegment eine geringere Wanddicke als der übrige Luftfederbalg (4) aufweist, wobei das geschwächte Umfangssegment vorzugsweise in Längsrichtung (X) orientiert ist.

8. Schienenfahrzeug (10), aufweisend ein als Fahrwerk dienendes Drehgestell (11) mit mindestens einer Achse und daran drehbar gelagerten Rädern, einen Wagenkasten (12), der um eine Fahrzeughochachse drehbar gelagert an dem Drehgestell (11) befestigt ist, wobei zwischen dem Wagenkasten (12) und dem Drehgestell (11) ein oder mehrere Luftfedern (1) nach einem der vorhergehenden Ansprüche angeordnet sind.
